# EUROPEAN PATENT APPLICATION

(11) **EP 1 779 963 A2**
(43) Date of publication of application: **02.05.2007**
(21) Application number: 06122585.0
(22) Date of filing: 19.10.2006
(51) Int. Cl.: B23K 31/02, B23K 11/06, B23K 13/02, B23K 13/04

(54) **Welding device for tubular containers made of sheet material.**

(30) Priority: 28.10.2005 IT BO20050663
(71) Applicant: Cevolani S.p.A, 40068 San Lazzaro di Savena-Bologna (IT)
(72) Inventor: Aiuola, Paolo, 40127 BOLOGNA (IT)
(74) Representative: Lanzoni, Luciano

(57) **Abstract**

A welding device for tubular containers made of sheet material comprises: a plurality of rolling rollers (7), positioned circumferentially to form a transit channel (4) having a tubular shape to allow the transit of a tubular piece or container made of sheet material (3), the latter having two partly overlapping longitudinal edges (2); a support frame for the rollers (7) comprising a first and a second curved sector (5, 6) adjacent to one another; on each curved sector (5, 6) there being attached a respective plurality of rollers (7) able to rotate about a respective axis at a tangent to the extension in cross-section of the transit channel (4), allowing axial sliding of the tubular piece (3) in the channel (4); a first curved sector (5) is able to move away from the relative second curved sector (6); welding means (20) positioned at the overlapping longitudinal edges (2) of the tubular piece (3) and designed to allow the edges to be welded together; the second curved sector (6) is positioned at overlapping longitudinal edges (2) and the welding means (20) are attached to the second curved sector (6).

## Description

The present invention relates to a welding device for tubular containers made of sheet material derived from flat pieces.

In particular, the present invention relates to a device for welding respective overlapping longitudinal edges of the tubular containers made of sheet material, for example cans for products to be canned.

As is known, these welding devices for tubular pieces are inserted in machines for the production of the above-mentioned cans starting with flat pieces of sheet.

These machines basically comprise:
- a unit for feeding flat metal sheets into a station for bending the metal sheets to form tubular pieces, that is to say, for "tubularising" the sheets;
- a unit for feeding the tubular pieces into
- a welding station, consisting of a roller cage forming a sliding channel for the tubular piece, and in which there is a bilateral seam welder which joins the two overlapping free lateral edges of the sheets.

In more detail, this welding station comprises the sliding channel formed by a set of rolling rollers (some of which are motor-driven, whilst the rest turn idly) in which the piece of sheet is fed ready bent, that is to say tubularised, with the longitudinal edges overlapping.

The rollers are supported by a rigid frame divided into two rigid curved half-parts, to promote movement of the tubular piece in the channel.

The frame consists of two specular half-parts substantially having the shape of an arc of a circle and distanced at a respective end to form an opening in which the overlapping longitudinal edges of the container are positioned. In said opening there extends a first welding head or roller which welds the outside of the edges.

Such devices have a second welding head or roller opposite the first head and in the tubular piece being fed: in this way, the overlapping longitudinal edges are welded on both sides.

Moreover, one of the curved half-parts of the frame may be regulated, moved or rotated towards or away from the other half-part to widen or narrow the opening in which the overlapping longitudinal edges are positioned.

Said regulation is necessary, since the thickness of the sheet used to make the tubular piece may vary, even by just a few hundredths of a unit.

In addition, the extension of the sheet used to make the tubular piece is subject to size tolerances, even if just a few hundredths of a unit.

In other words, if using a sheet with greater thickness or extension, it is necessary to widen the outer diameter of the sliding channel to allow the new tubular piece to enter the channel: in this situation, micro-regulation is required to distance the movable half-part (and the relative rollers), but maintaining unchanged the position of the operating zone of the two welding heads (in practice the theoretical inner diameter of the piece).

However, such devices have an important disadvantage linked to the operations for regulation and movement of the movable half-part.

It should be noticed that moving the half-part to allow the insertion of a tubular piece with a greater cross-section widens the opening and also varies the positioning of the overlapping longitudinal edges of the piece, since each upper end of the frame half-part defines a relative positioning of the free longitudinal edge.

Therefore, this regulation tends to give an irregular arrangement in the positioning of the longitudinal edges, with welding that may be unacceptable on the tubular piece, since it must also be considered that the position of the welding heads or rollers remains fixed and is positioned to work on a weld bead with predetermined width.

Another disadvantage of the prior art is the lack of a precise part for measuring the movement of the movable half-part. Therefore, the movement is measured with relative precision between the movable half-part and the fixed half-part, and any adjustments must be made by eye by the machine operator.

The aim of the present invention is, therefore, to overcome the above-mentioned disadvantages by producing a welding device for tubular containers able to modify the distance between the two half-parts, keeping the positioning of the overlapping edges constant.

Another aim of the present invention is to provide a welding device for tubular containers made of sheet material which has a part for measuring the movement of the movable half-part.

The technical purpose indicated and the aims specified are substantially achieved by a welding device for tubular containers made of sheet material comprising the technical features described in one or more of the claims herein.

Further characteristics and advantages of the present invention are more apparent in the detailed description below, with reference to a preferred, non-limiting, embodiment of the welding device for tubular containers made of sheet material, illustrated in the accompanying drawings, in which:
- Figure 1 is a schematic front view with some parts cut away to better illustrate others, of a welding device for tubular pieces, in accordance with the present invention;
- Figure 2 is a cross-section along line II - II from Figure 1 of a construction detail of the device from Figure 1;
- Figure 3 is a schematic side view with some parts cut away to better illustrate others, of another detail from Figure 1.

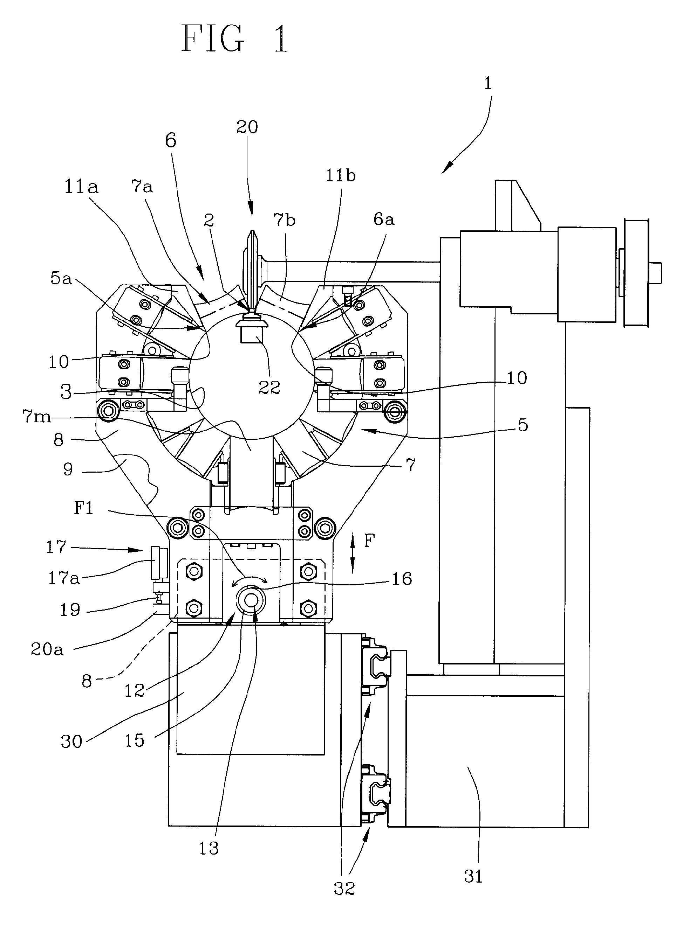

With reference to the accompanying drawings, and in particular with reference to Figure 1, the numeral 1 denotes as a whole the welding device in accordance with the present invention.

This device 1 is used to weld the overlapping longitudinal edges 2 of a tubular piece 3 of sheet material, previously bent so that it takes on the respective tubular shape.

The device 1 has a transit channel 4 which substantially has a tubular shape to allow the respective tubular piece 3 to be slidably housed in it.

In detail, the transit channel 4 consists of a plurality of rolling rollers 7 supported by a frame consisting of a first and a second curved sector 5, 6 adjacent to one another.

In further detail, as illustrated in Figure 1, the first curved sector 5 is located below the second curved sector 6 and in cross-section has an arc of a circle shape with respective opposite ends 5a.

Advantageously, the rollers 7 positioned on the first curved sector 5 define a part of the channel 4 extending over more than 180° and, as a result, the rollers 7 on the second curved sector 6, which also has an arc of a circle shape with respective opposite ends 6a, define a smaller part of the channel 4.

In this situation it should be noticed that the ends 5a of the first sector 5 are positioned at the respective ends 6a of the second sector 6.

Moreover, it should be noticed that the tubular piece 3 is fed into the channel 4 with the respective overlapping longitudinal edges 2 inserted between the respective ends 6a of the second curved sector 6.

The tubular piece 3 can move along the channel 4 thanks to the presence of the above-mentioned plurality of rolling rollers 7, positioned circumferentially in the transit channel 4 on the curved sectors 5, 6.

In the case illustrated, and as already indicated, most of the rollers 7 are positioned on the first curved sector 5 and can rotate about an axis at a tangent to the circular extension of the transit channel 4 as illustrated in Figure 1.

At least one roller 7m is preferably motor-driven by suitable motors, known and therefore not described and illustrated in detail, allowing the tubular container 3 to slide in and along the channel 4.

The second curved sector 6 substantially has two rollers 7a and 7b positioned on opposite sides of the overlapping longitudinal edges 2. These two rollers 7a and 7b are supported by two contact elements or projections 11a and 11b, each of which is positioned at a respective end 6a of the second curved sector 6 and supporting the rollers 7a and 7b as described for the rollers 7 of the first curved sector 5.

Moreover, between the rollers 7a and 7b there extend welding means 20 positioned at the overlapping longitudinal edges 2 to weld said edges while the container 3 slides in the channel 4.

The welding means 20 rigidly engage with the second curved sector 6 and consist of a first welding head 21 operating on the overlapping longitudinal edges 2.

The first welding head 21 is not described in detail, since it is of the known type and widely used in the specific technical sector.

As illustrated in Figure 1, the welding means 20 also have a second welding head 22 positioned in the channel 4 so that it can contribute with the internal welding of the overlapping longitudinal edges 2.

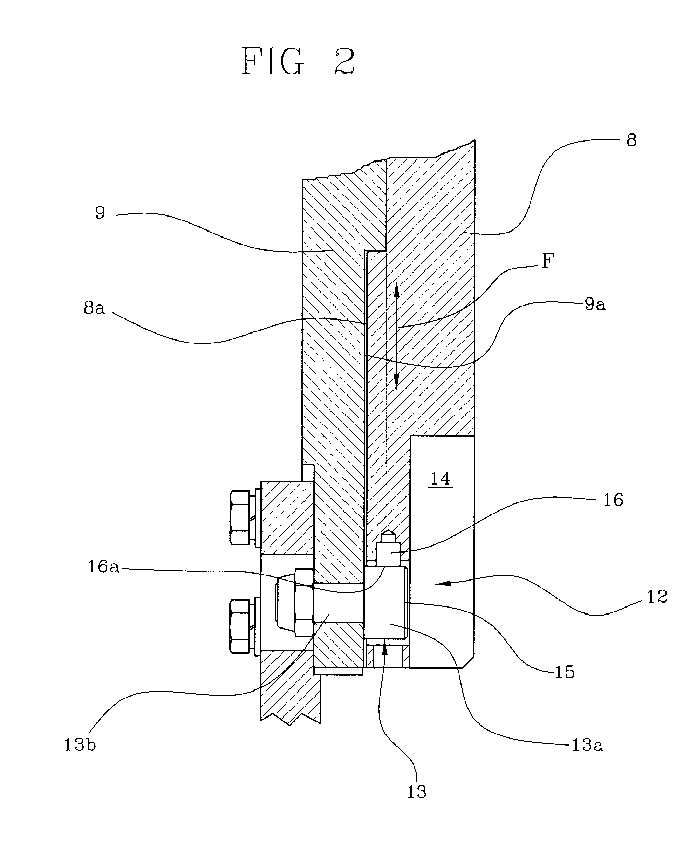

In more technical detail, the first and second curved sectors 5, 6 are advantageously equipped with respective support portions 8, 9 abutted to one another at respective contact surfaces 8a, 9a as also illustrated in Figure 2.

In particular, the support portions 8, 9 are positioned below the curved sectors 5 and 6.

As shown in Figure 1, the support 9 extends below the support 8 and is attached to a lower base 30.

This base 30 is in turn slidably attached to a support 31 on which the welding means 20 are integral: in other words, the positions of the second curved sector 6 and the welding means 20 are stable and fixed.

Figure 2 partially illustrates the support portions 8, 9 showing the respective contact surfaces 8a, 9a abutted to one another so that they can slide relative to one another during a movement of the first sector 5 relative to the second sector 6 (see arrow F in Figures 1 and 2).

Advantageously, the first sector 5 can move away from the second curved sector 6 along a radial direction between a position close to the second sector in which it defines a transit channel 4 minimum cross-section (see Figure 1), and a position distanced from the second sector in which it defines the transit channel 4 maximum cross-section.

It should be noticed that the movement of the first curved sector 5 is a very slight movement, normally between 0.1 mm and 0.5 mm.

As described in more detail below, such a movement allows the insertion of tubular containers 2 which have a variable thickness or extension.

In other words, moving the first sector 5 away from the second sector 6 allows the insertion of a tubular container 3 which is thicker and therefore has a greater outer diameter, keeping the inner diameter constant, or having variable extension, within the limits of its size tolerance.

It should be noticed that with the first sector 5 in the distanced position the opposite ends 5a of the first curved sector 5 are distanced from the ends 6a of the second curved sector 6 to form two openings 10. In this situation the openings 10 constitute two interruptions in the transversal extension of the channel 4. With the first sector 5 in the distanced position, the channel 4 has a substantially elliptical cross-section, not circular like in the close position in which the ends 5a and 6a of the first and second curved sectors 5, 6 are close together.

The device 1 also has movement means 12 set up to move the first curved sector 5 as described above.

The movement means 12 are attached to the support portions 8, 9 of the first and second curved sectors 5, 6.

More precisely, as illustrated in Figure 1, the movement means 12 consist of a cam element 13 inserted in a cavity 14 made in the support portion 8 of the first curved sector 5. In particular, the cam element 13 consists of a screw having a head portion 13a housed in the cavity 14 and a rod 13b pivoting at the support portion 9 of the second curved sector 6 to rotate about the respective longitudinal extension parallel with the longitudinal extension of the tubular container 3. Advantageously, the head 13a of the cam element 13 has an eccentric outer surface 15 (see Figure 2).

The eccentric element 15 is in sliding contact with a contact part 16 positioned in the cavity 14 and above the cam element 13.

The contact part 16 preferably consists of a contact surface 16a projecting in the cavity 14 above the cam element 13, and designed to make sliding contact with the eccentric surface 15.

In this way, the cam element 13 can rotate (see arrow F1 in Figure 1) at least between a first position corresponding to the first sector 5 close position, and a second position corresponding to the first sector 5 distanced position.

In other words, the first sector 5 support portion 8 and the first sector 5 itself rest on the cam element 13 by means of the contact between the surface 16a of the contact part 16 and the eccentric surface 15 of the cam element 13.

As shown in Figure 2, during cam 13 movement, the contact surface 8a of the support portion 8 of the first curved sector 5 slides on the contact surface 9a of the support portion 9 of the second curved sector 6.

The device 1 may also comprise means 17 for regulating the movement of the first sector 5 designed to measure the movement between the respective close and distanced position.

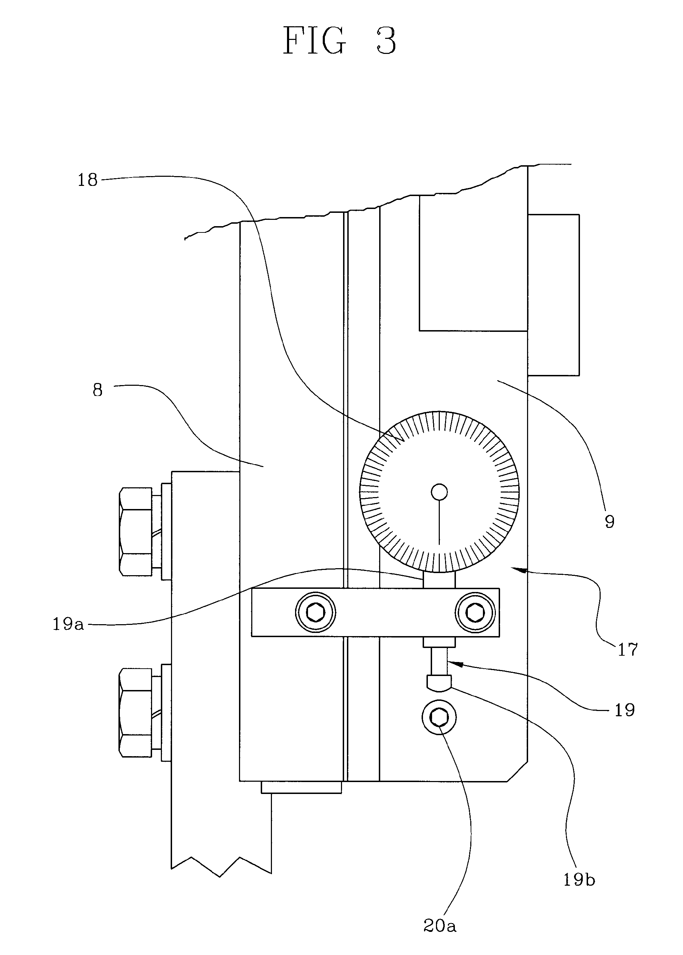

In particular, the regulating means 17 consist of a dial gauge 17a attached to the support portions 8, 9 of the first and second curved sectors 5, 6. The dial gauge 17a, of the known type and normally used in many technical applications, has a part 18 for measuring and displaying the movement of the first sector 5 attached to the support portion 9 of the second sector 6 (Figures 1 and 3). The measuring and display part 18 is not described in detail, since it is a part of the dial gauge 17a which is known and therefore not illustrated in detail.

The dial gauge 17a also has a slider 19 which can move vertically, that is to say along the direction of movement of the first curved sector 5. Moreover, the slider 19 substantially has the shape of a rod, with a first end 19a attached to the measuring and display part 18 and a second end 19b opposite the first end 19a. In this way, the slider 19 projects from the part 18 and can move in it.

The regulating means 17 also have a pin 20a projecting from the support portion 8 of the first curved sector 5, better illustrated in Figure 1. The projecting pin 20a is below the dial gauge 17a and is abutted to the second end 19b of the slider 19.

In this situation, during the movement of the first sector 5, and consequently of the respective support portion 8, the slider 19 is also moved, interacting with the measuring and display part 18. Therefore, for each movement of the first sector 5 a corresponding movement value is detected by the dial gauge 17a.

In this way, the tubular container 3 is fed into the channel 4 with the respective overlapping longitudinal edges 2 positioned at the second curved sector and in particular between the two rollers 7a and 7b of the second curved sector 6.

If a container 3 with an outer diameter greater than the channel 4 diameter must be inserted, the first curved sector 5 is moved away from the second curved sector 6 substantially integral with the sealing means 20.

In this case, acting on the cam element 13 as specified above, the position of the eccentric surface 15 is varied.

Consequently, the first sector 5 and the respective support portion 8 is lowered and moved away from the second curved sector forming the above-mentioned openings 10 at the ends 5a, 6a of the curved sectors 5, 6.

This movement is regulated and measured by the dial gauge 17a which displays with the respective dial the value of the movement of the first sector 5 relative to the second sector 6.

In this way, the channel 4 diameter is modified, allowing the transit of the tubular container 3 which has a greater outer diameter, without affecting, as a position, the zone of the second curved sector 6 and the welding means 20 which in this way can correctly perform the welding along the appropriate zones of the overlapping edges 2.

The invention solves the problems encountered in the prior art and achieves the preset aims.

It should be noticed that by moving the first sector 5 away from the second 6 the channel 4 is adapted to the outer diameter of the container 3, but no change is made to the inner diameter and, above all, the position of the overlapping longitudinal edges 2.

In this situation, the shape of the channel 4 in the first sector distanced position 5 squeezes the container 3, holding the overlapping edges 2 in position. Said squeezing does not affect the overlapping zone of the edges 2 but only the lateral zones of the tubular container 3, that is to say, the zones close to the openings 10. It should also be noticed that said squeezing is minimal and has no influence on final production of the container 3, since the movements of the first sector 5 are minimal.

Consequently, the welding means 20 carry out the welding operations correctly on the longitudinal edges 2 which remain in the predetermined position.

Another advantage is the possibility of detecting and measuring the movement of the first sector 5. This advantage is provided by the positioning of the dial gauge 17a operating on the support portions 8, 9 of the sectors 5, 6.

The invention described has evident industrial applications and may be modified and adapted without thereby departing from the scope of the inventive concept. Moreover, all details of the invention may be substituted by technically equivalent elements.

## Claims

1. A welding device for tubular containers made of sheet material comprising at least:
- a plurality of rolling rollers (7), positioned circumferentially to form a transit channel (4) which has a tubular shape to allow the transit of a tubular piece or container made of sheet material (3), the latter having two partly overlapping longitudinal edges (2);
- a support frame for the rollers (7) comprising a first and a second curved sector (5, 6) adjacent to one another; there being attached to each curved sector (5, 6) a respective plurality of said rollers (7) able to rotate about a respective axis at a tangent to the extension in cross-section of the transit channel (4), allowing axial sliding of the tubular piece (3) in the channel (4);
- at least the first curved sector (5) being able to move away from the relative second curved sector (6);
- welding means (20) positioned at the overlapping longitudinal edges (2) of the tubular piece (3) and designed to allow the edges to be welded together; the device being **characterised in that** the second curved sector (6) is positioned at the overlapping longitudinal edges (2), the welding means (20) being attached to the second curved sector (6).

2. The device according to claim 1, **characterised in that** the first curved sector (5) can move radially relative to the second curved sector (6) between a position close to the second sector in which it defines a transit channel (4) minimum cross-section, and a position distanced from the second sector in which it defines a transit channel (4) maximum cross-section.

3. The device according to claim 2, **characterised in that** the first curved sector (5) can move between the close position and the distanced position with a movement of between 0.1 and 0.5 mm.

4. The device according to claim 2 or 3, **characterised in that** in cross-section the rollers (7a, 7b) of the second curved sector (6) form an arc of a circle shape, the overlapping longitudinal edges (2) being inserted between respective opposite ends (6a) of the second curved sector (6).

5. The device according to claims 2 to 4, **characterised in that** in cross-section the rollers (7) of the first curved sector (5) form an arc of a circle shape with respective opposite ends (5a) and extending over more than 180°; said opposite ends (5a) of the first curved sector (5) being located at the opposite ends (6a) of the second curved sector (6).

6. The device according to the foregoing claim, **characterised in that** the first curved sector (5), in the distanced position, has the opposite ends (5a) distanced from the opposite ends (6a) of the second curved sector (6) to form two openings (10).

7. The device according to any of the claims from 4 to 6, **characterised in that** the second curved sector (6) comprises at least two rollers (7a, 7b) positioned on opposite sides of the overlapping longitudinal edges (2); the two rollers (7a, 7b) being supported by two contact elements or projections (11a, 11b), each positioned at a respective end (6a) of the second curved sector (6) .

8. The device according to claims 1 and 7, **characterised in that** the welding means (20) comprise a first welding head (21) positioned between the two rollers (7a, 7b) and designed to make contact with the overlapping longitudinal edges (2).

9. The device according to any of the claims from 2 to 8, **characterised in that** the curved sectors (5, 6) have respective support portions (8, 9) abutted to one another at contact surfaces (8a, 9a) of the support portions (8, 9), the contact surfaces (8a, 9a) sliding against one another during movement of the first sector (5) between the respective close and distanced positions.

10. The device according to any of the claims from 1 to 9, **characterised in that** the support (9) of the second curved sector (6) extends below the support (8) of the first curved sector (5) and is attached to a lower base (30);
said base (30) in turn being slidably attached, by means of guides (32), to a lateral support (31) to which the welding means (20) are attached.

11. The device according to claims 9 and 10, **characterised in that** it also comprises movement means (12) attached to the support portions (8, 9) of the first and second curved sectors (5, 6) for moving the first sector (5) relative to the second (6).

12. The device according to the foregoing claim, **characterised in that** the movement means (12) comprise a cam element (13) inserted in a cavity (14) made in the support portion (8) of the first curved sector (5) and pivoting at the support portion (9) of the second curved sector (6), to rotate about an axis parallel with the longitudinal extension of the tubular container (3).

13. The device according to the foregoing claim, **characterised in that** the cam element (13) has a projecting eccentric portion (15) in contact with a contact part (16) positioned in the cavity (14); the cam element (13) being able to rotate between a first limit position corresponding to the first sector (5) close position, and a second limit position corresponding to the first sector (5) distanced position.

14. The device according to any of the claims from 9 to 13, **characterised in that** it also comprises means (17) for regulating the movement of the first sector (5) attached to the support portions (8, 9), for detecting the movement between the respective close and distanced positions.

15. The device according to the foregoing claim, **characterised in that** the regulating means (17) comprise a dial gauge (17a) attached to the support portions (8, 9) of the first and second curved sectors (5, 6).

16. The device according to the foregoing claim, **characterised in that** the dial gauge (17a) has a part (18) for measuring and displaying the movement of the first sector (5) attached to the support portion (9) of the second sector (6) and a slider (19), the latter being able to move along the direction of movement of the first curved sector (5), having a first end (19a) attached to the measuring and display part (18) and a second end (19b) opposite the first end (19a).

17. The device according to the foregoing claim, **characterised in that** the regulating means (17) also comprise a pin (20a) projecting from the support portion (8) of the first curved sector (5), the second end (19b) of the slider (19) being attached to said projecting pin (20a).
